# EUROPEAN PATENT APPLICATION

(11) **EP 2 764 773 A1**
(43) Date of publication of application: **13.08.2014**
(21) Application number: 12838752.9
(22) Date of filing: 03.10.2012
(51) Int. Cl.: A01K 63/04, A01K 63/06

(54) **SUPPLY DEVICE FOR DISSOLVED GAS**

(30) Priority: 03.10.2011 JP 2011219476
(71) Applicant: Japan Agency for Marine-Earth Science and Technology, Yokosuka-shi Kanagawa 237-0061 (JP)
(72) Inventor: WATSUJI, Tomoo, Yokosuka-shi Kanagawa 237-0061 (JP)
(74) Representative: Wasner, Marita
(86) International application number: PCT/JP2012/075639
(87) International publication number: WO 2013/051603

(57) **Abstract**

A problem with conventional rearing apparatuses for deep-sea organisms was difficulty in supplying dissolved gas into water in an appropriate amount.

A dissolved gas supplying device 1 for supplying dissolved gas such as hydrogen sulfide, methane and hydrogen to water in a water tank, includes: a circulation path 11 to take out the water from the water tank A and return it to the water tank; a pressure pump 12 to allow the water to flow through the circulation path 11; a gas cylinder 13 filled with gas to be dissolved; a dissolved gas supplying means 14 that is disposed in the circulation path 11 to allow the water to pass through it and to dissolve the gas of the gas cylinder 13 in the water; and a gas regulating valve 16 to open/close a gas channel 15 that connects the gas cylinder 13 to the dissolved gas supplying means 14. With this configuration, the device can supply the dissolved gas into the water in an appropriate amount according to need. Therefore, the device is very suitable for rearing apparatuses for aquatic organisms of chemosynthetic ecosystems that utilize the dissolved gas.

## Description

### TECHNICAL FIELD

The present invention relates to a device for supplying predetermined gas to be dissolved into water, in particular to a dissolved gas supplying device used for rearing aquatic organisms of chemosynthetic ecosystems that live in the environment of deep-sea hydrothermal/cold vent areas or the like by utilizing dissolved gases such as hydrogen sulfide, methane and hydrogen.

### BACKGROUND ART

Conventional apparatuses for rearing deep-sea organisms are described in, for example, Patent Literatures 1 and 2. The apparatus described in Patent Literature 1 includes a water tank made of a pressure tight container, a water stream generator to generate a water stream in one direction (lateral direction) in the water tank, a temperature zone generator to define a local temperature zone by heating or cooling a part of the water stream flowing on the bottom of the water tank, and a temperature zone retainer to retain the local temperature zone defined by the temperature zone generator by preventing the temperature zone from being diffused over the whole water tank, such as nozzle. It is intended that deep-sea organisms such as shells that are less likely to be swept away by the water stream are reared in the temperature retainer.

The apparatus described in Patent Literature 2 includes a main water tank to house an aquatic organism together with water, a hot water supplying means to jet hot water upward from an jetting nozzle disposed on the bottom of the main water tank, and a hot water discharging means disposed at the upper part of the main water tank to discharge the rising hot water to the outside. The apparatus is configured to form a cold water zone and a local hot water zone in the water, and thereby enables rearing aquatic organisms that inhabit hydrothermal vent regions in a variety of temperature ranges together.

### CITATION LIST

### Patent Literature

Patent Literature 1: Japanese Patent Unexamined Publication No. Hei9-117235
Patent Literature 2: International Publication WO 2008/114720

### SUMMARY OF INVENTION

### Technical Problem

In recent years, researches have been conducted in aquatic organisms of chemosynthetic ecosystems, which live in the environment of deep-sea hydrothermal/cold vent areas by utilizing dissolved gases such as hydrogen sulfide, methane and hydrogen. These gases are choking or flammable gases. Furthermore, hydrogen sulfide is very toxic to humans. Meanwhile, because these dissolved gases are essential for aquatic organisms of chemosynthetic ecosystems, it is required to safely supply the dissolved gases when rearing them.

However, among the above-described conventional rearing apparatuses for deep-sea organisms, the apparatus of Patent Literature 1 cannot feed gas from the outside. Therefore, there is a difficulty in using it for rearing aquatic organisms of chemosynthetic ecosystems that utilize gas. The apparatus described in Patent Literature 2 can supply hot water containing dissolved hydrogen sulfide by means of adding sodium sulfide. However, a problem with this apparatus is that it cannot supply dissolved gases of methane and hydrogen into water, and it has been required to solve this problem.

The present invention was made in view of the above-described earlier problem, and a feature thereof is to provide a device for safely supplying gas that is difficult to handle, such as hydrogen sulfide, methane and hydrogen, into water in a water tank, which can supply the dissolved gas just in an appropriate amount according to need, and is therefore very suitable for rearing apparatuses for aquatic organisms of chemosynthetic ecosystems that utilize dissolved gases such as hydrogen sulfide, methane and hydrogen.

### Solution to Problem

A dissolved gas supplying device of the present invention is a device for supplying dissolved gas to water in a water tank, which includes: a circulation path to take out the water from the water tank and to return it to the water tank; a pressure pump to allow the water flow through the circulation path; a gas cylinder filled with gas to be dissolved; a dissolved gas supplying means that is disposed in the circulation path to allow the water to pass through it and to dissolve the gas of the gas cylinder into the water; and a gas regulating valve to open/close a gas channel that connects the gas cylinder to the dissolved gas supplying means. This configuration serves as means for solving the problem with conventional devices.

### Advantageous Effect of Invention

According to the present invention, the above-described configuration enables supplying dissolved gas in an appropriate amount according to need when the dissolved gas is supplied to the water in a water tank. Therefore, the present invention is very suitable for rearing apparatuses for aquatic organisms of chemosynthetic ecosystems that utilize dissolved gas such as hydrogen sulfide, methane and hydrogen.

### BRIEF DESCRIPTION OF DRAWINGS

Fig. 1 is a block diagram illustrating an embodiment of a dissolved gas supplying device according to the present invention.
Fig. 2 is an explanatory cross sectional view of a case of a dissolved gas supplying means.
Fig. 3 is an explanatory cross sectional view of a case of deaerating means.

### DESCRIPTION OF EMBODIMENTS

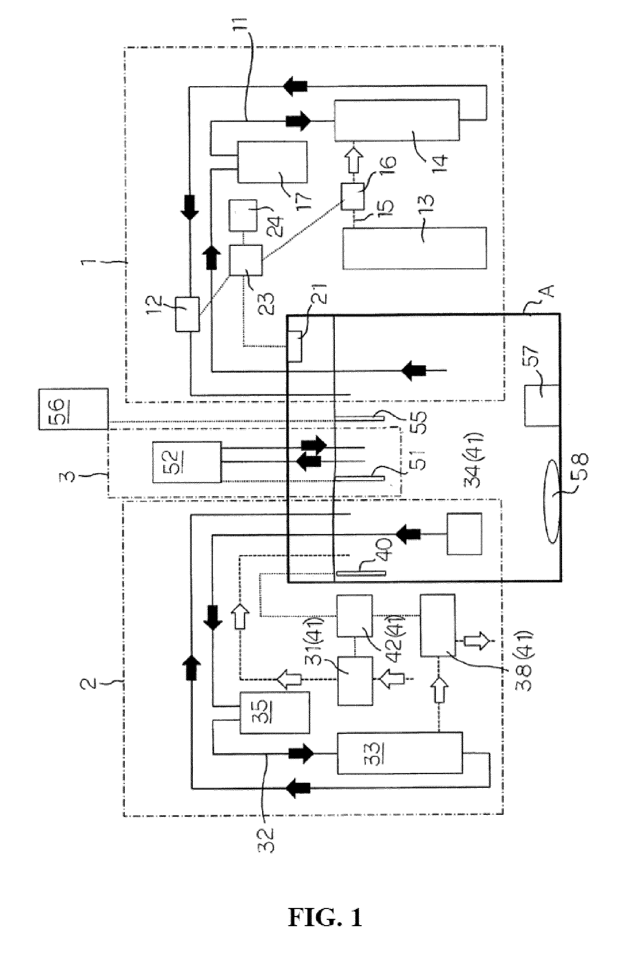

A dissolved gas supplying device exemplified in Fig. 1 serves as one of the components of a rearing apparatus for aquatic organisms of chemosynthetic ecosystems that utilize dissolved gases of hydrogen sulfide, methane and hydrogen.

That is, the aquatic organism rearing apparatus includes a water tank A that serves as a rearing tank of aquatic organisms, and an aquatic organism of a chemosynthetic ecosystem is housed together with sea water or artificial sea water in the water tank A. The rearing apparatus further includes the dissolved gas supplying device 1, a dissolved oxygen level controlling device 2 and a water temperature controlling means 3 to control the temperature of the water in the water tank A.

The dissolved gas supplying device 1, which supplies dissolved gas to the water in the water tank A, includes a circulation path 11 to take out the water from the water tank A and to return it to the water tank A, a pressure pump (magnet pump) 12 to allow the water to flow through the circulation path 11. Further, the supplying device 1 includes a gas cylinder 13 filled with gas to be dissolved, a dissolved gas supplying means 14 that is disposed in the circulation path 11 so as to allow the water to flow through it and to dissolve the gas of the gas cylinder 13 in the water, and a gas regulating valve 16 to open/close a gas channel 15 that connects the gas cylinder 13 to the dissolved gas supplying means 14. In the circulation path 11, a pre-filter 17 for filtrating the water taken out from the water tank A is provided at the upstream side of the dissolved gas supplying means 14.

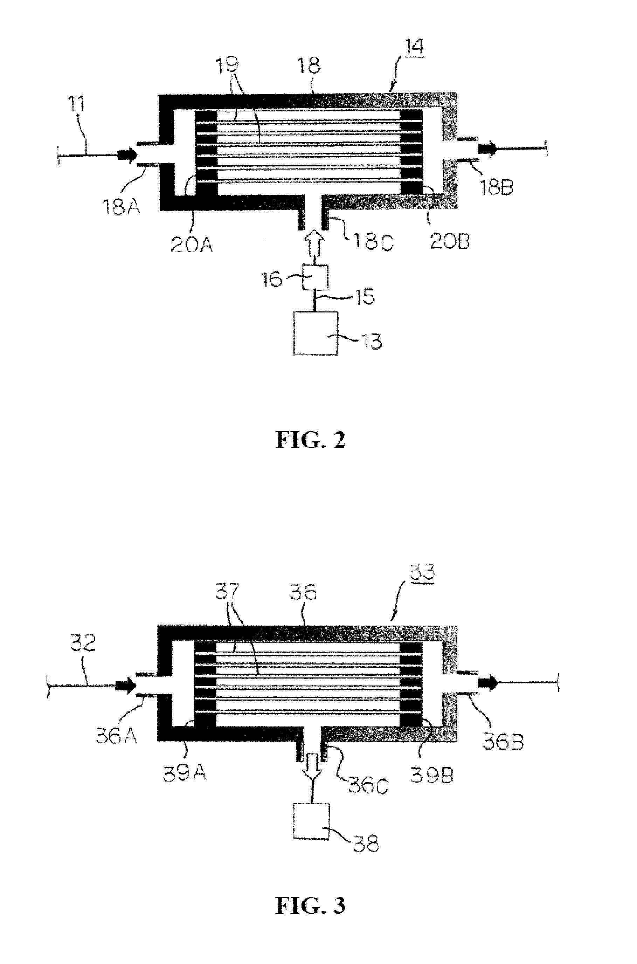

As illustrated in Fig. 2, the dissolved gas supplying means 14 includes a case 18 with a water inlet 18A on one end and a water outlet 18B on the other end, and a number of hollow fiber tubes 19 that are made of gas permeable porous membrane and are disposed in the flow direction of the water in the case 18. Inside the case 18, holders 20A and 20B of the hollow fiber tubes 19 are provided on one and the other ends. These holders 20A and 20B hold both ends of each hollow fiber tube 19 to keep it straight. Each hollow fiber tube 19 is open at the ends. Further, a gas supply opening 18C is provided in the middle of the case 18. The gas supply opening 18C is connected to the gas channel 15.

Furthermore, the dissolved gas supplying device 1 of this embodiment includes a timer 21 and a controller 23 to perform an on-off control of the pressure pump 12 and the gas regulating valve 16 according to a set time of the timer 21. The controller 23 is provided with a recorder 24 to record the operation of the pressure pump 12 and the gas regulating valve 16.

The dissolved oxygen level controlling device 2, which controls the amount of dissolved oxygen in the water in the water tank A, includes an air pump 31 to supply air into the water tank A, a circulation path 32 to take out the water from the water tank A and to return it to the water tank A, a pressure pump 34 to allow the water to flow through the circulation path 32, and a deaerating means 33 that is disposed in the circulation path 32 so as to allow the water to pass through it and to remove the dissolved oxygen in the water. In the circulation path 32, a pre-filter 35 for filtrating the water taken out from the water tank A is provided at the upstream side of the deaerating means 33.

As illustrated in Fig. 3, the deaerating means 33 includes a case 36 with a water inlet 36A on one end and a water outlet 36B on the other end, a number of hollow fiber tubes 37 that are made of gas permeable porous membrane and are disposed in the flow direction of the water in the case 36, and a vacuum pump 38 to evacuate gas in the case 36. Inside the case 36, holders 39A and 39B of the hollow fiber tubes 37 are provided on one and the other ends. These holders 39A and 39B hold both ends of each hollow fiber tube 37 to keep it straight. Each hollow fiber tube 3 is open at both ends. Further, a gas discharge opening 36C is provided in the middle of the case 36. The gas discharge opening 36C is connected to the vacuum pump 38.

The dissolved oxygen level controlling device 2 of this embodiment further includes an oxygen sensor 40 to detect the dissolved oxygen concentration in the water in the water tank A, and an oxygen concentration controlling means 41 to control the dissolved oxygen concentration in the water to be within a predetermined range according to a detected value of the oxygen sensor 40. The oxygen concentration controlling means 41 is composed of the air pump 31, the pressure pump 34, the vacuum pump 38 and a controller 42 to operate them.

The water temperature controlling means 3 includes a temperature sensor 51 to measure the water temperature, and a water temperature controller 52 to control the water temperature to be within a predetermined range according to a detected value of the temperature sensor 51. The water temperature controller 52 has a function of heating or cooling the water in the water tank A while circulating it. With this configuration, the water temperature can be maintained at the right temperature of the habitat of the aquatic organism in captivity.

Further, for monitoring the pH of the water in the water tank A, the aquatic organism rearing apparatus of this embodiment includes a pH electrode 55 and a pH display unit 56. Furthermore, the rearing apparatus includes a water jet pump 57 to cause a constant water stream in the water tank A. On the bottom of the water tank A, coral sand 58 is bedded as a calcium carbonate-based material for adjusting the pH of the water. With this configuration, the pH of the water can be maintained at the right pH value of the habitat of the aquatic organism in captivity.

The aquatic organism rearing apparatus having the above-described configuration is used for rearing aquatic organisms of chemosynthetic ecosystems that utilize dissolved gases such as hydrogen sulfide, methane and hydrogen. Such aquatic organisms include deep-sea organisms that inhabit deep sea at a depth of 200 m or deeper, in particular those inhabit the surrounding area of a hydrothermal vent or a cold seep. Specifically, such aquatic organisms include Gandalfus yunohana, Shinkaia crosnieri, Munidopsis spp., Alvinocaris longirostris, hydrothermal-vent barnacles, tubeworms, Bathymodiolus spp., Calyptogena soyoae, Osedax japonicas, Adipicola pacifica, living organisms of whale-fall communities, Lithodes turritus Ortmann, Zoarcidae spp., and the like. In addition, chemosynthetic bacteria and the like that inhabit the surrounding area of a hydrothermal vent or a cold seep or a hot spring or an area with volcanic gas emissions can also be incubated. The rearing water is sea water or artificial sea water as described above. However, it is also possible to use rearing water with an additional component such as trace metal and organic component according to the characteristics of the aquatic organism in captivity.

In the above-described aquatic organism rearing apparatus, the dissolved gas supplying device 1 supplies dissolved gases essential for aquatic organisms of chemosynthetic ecosystems, such as hydrogen sulfide, methane and hydrogen, to the water tank A, and the dissolved oxygen level controlling device 2 controls the dissolved oxygen level in the water tank A.

In the dissolved gas supplying device 1, the controller 23 puts the pressure pump 12 in operation as well as opens the gas regulating valve 16 at the set time of the timer 21. Then, the water in the water tank A circulates in the circulation path 11. In the dissolved gas supplying means 14, the water flows from the inlet 18A of the case 18 through the inside of the hollow fiber tubes 19 to the outlet 18B. During this time, predetermined pressurized gas is supplied from the gas cylinder 13 into the case 18. This causes the gas to pass through the porous membrane of the hollow fiber tube 19 to be dissolved in the inside water.

In the supplying device 1, the controller 23 stops the pressure pump 12 as well as closes the gas regulating valve 23 according to the set time of the timer 21.

In this way, the dissolved gas supplying device 1 can supply the dissolved gas in an appropriate amount according to need when supplying the dissolved gas to the water in the water tank. Therefore, the supplying device 1 is very suitable for rearing apparatuses for aquatic organisms of chemosynthetic ecosystems that utilize gases such as hydrogen sulfide, methane and hydrogen.

If saturation or high concentration of the dissolved gas is required, it is only required to increase the supplying pressure from the gas cylinder 13 in the dissolved gas supplying device 1. If lower concentration of the dissolved gas is required, it is also possible to limit the time period of the gas supply by using the timer 21 as well as to decrease the pressure from the gas cylinder 13. An environment with low dissolved gas concentration can be thus established. It should be understood that a regulator may be used for precisely regulating the supplying pressure of the gas.

Further, because the dissolved gas supplying device 1 is configured such that the dissolved gas supplying means 14 is composed of the case 18 and the hollow fiber tubes 19 that are made of gas permeable porous membrane and are disposed in the flow direction of the water in the case 18, it can effectively dissolve the gas in the water without emitting excess gas to the outside. Therefore, the device is further advantageous as a device for supplying toxic, choking or flammable gas such as hydrogen sulfide, methane and hydrogen.

Furthermore, because the pressure pump 12 and the gas regulating valve 16 are operated according to the timer 21 and the controller 23, the dissolved gas supplying device 1 can automatically maintain the dissolved gas concentration in the water within a proper range.

The dissolved gas supplying device 1 of the present invention may perform the control by different ways other than by using the timer 21. For example, a gas sensor to detect the dissolved gas concentration may be used to perform a feedback control of the dissolved gas concentration or to display the dissolved gas concentration so that the pressure pump 12 and the gas regulating valve 16 can be manually operated.

In the above-described aquatic organism rearing apparatus, it is required to maintain the dissolved oxygen at a right level in order to rear deep sea organisms in good conditions. The dissolved oxygen is consumed by breathing of aquatic organisms or bacteria, oxidation of the dissolved gas and the like. Meanwhile, if the water temperature is low, the dissolved oxygen level may become too high because oxygen in the air dissolves more easily. To cope with this, the dissolved oxygen level controlling device 2 controls the dissolved oxygen level in the water in the water tank A.

The dissolved oxygen level controlling device 2 detects the dissolved oxygen concentration by means of the oxygen sensor 40. If the dissolved oxygen concentration is at or lower than a predetermined value, the device puts the air pump 31 into operation to perform aeration of the water to supply oxygen. Then, when the dissolved oxygen concentration reaches a proper value or after a predetermined time period has elapsed, the device stops the air pump 31.

If the dissolved oxygen concentration is at or higher than a predetermined value, the controlling device 2 puts the pressure pump 34 and the vacuum pump 38 into operation through the controller 42. Then, the water in the water tank A is circulated in the circulation path 32. In the deaerating means 33, the water flows from the inlet 36A of the case 36 through the inside of the hollow fiber tubes 37 to the outlet 36B. During this time, the vacuum pump 38 evacuates the gas in the case 36. This causes the dissolved oxygen in the water flowing inside the hollow fiber tubes 37 to pass through the porous membrane of the hollow fiber tubes 19 to be removed, i.e. deaeration is performed.

When the dissolved oxygen concentration in the water decreases with the deaeration of the dissolved oxygen and the detected value of the oxygen sensor 40 thus changes to a predetermined value or lower, the controlling device 2 stops the pressure pump 34 and the vacuum pump 38.

In this way, the dissolved oxygen level controlling device 2 can maintain the dissolved oxygen level in the water in the water tank A at an appropriate level. Therefore, the controlling device 2 is very suitable for rearing apparatuses for aquatic organisms of chemosynthetic ecosystems that inhabit deep sea.

Further, because the dissolved gas level controlling device 2 is configured such that the deaerating means 33 is composed of the case 36, the hollow fiber tubes 37 that are made of gas permeable porous membrane and are disposed in the flow direction of the water in the case 36, and the vacuum pump 38, it can effectively remove the dissolved oxygen from the water.

Furthermore, the dissolved oxygen level controlling device 2 includes the oxygen concentration controlling means 41 that performs a control (feedback control) of maintaining the dissolved oxygen concentration in the water within a predetermined range according to the detected value of the oxygen sensor 40, in other words, the controlling device 2 includes the controller 42 that operates the air pump 31, the pressure pump 34 and the vacuum pump 38 so as to maintain the dissolved oxygen concentration within a predetermined range. Therefore, it can automatically maintain the dissolved oxygen concentration within a proper range.

The dissolved oxygen level controlling device 2 may perform the control by different ways other than the above-described feedback control. For example, because the dissolved oxygen concentration in the water changes with time, the correlation between time and the dissolved oxygen concentration can be determined in advance. Then, the air pump 31, the pressure pump 34 and the vacuum pump 38 may be intermittently operated at predetermined time intervals. Alternatively, the control may be performed by using a timer as with the above-described dissolved gas supplying device 1. Not only automatic controls, the dissolved oxygen concentration in the water may be displayed so that the air pump 31, the pressure pump 34 and the vacuum pump 38 can be manually operated while checking the display.

Further, the above-described aquatic organism rearing apparatus may be further provided with a main controller that integrally controls the dissolved gas supplying device 1, the dissolved oxygen level controlling device 2 and the water temperature controlling means 3, so as to control the dissolved gas concentration in the water, the dissolved oxygen concentration and the water temperature to be within respective appropriate ranges.

The configuration of the dissolved gas supplying device of the present invention is not limited to the above-described embodiment, and details of the configuration may be suitably changed without departing from the gist of the present invention. For example, the supplying device may be handled as an independent device, and such devices may be installed in existing water tanks.

### REFERENCE SIGNS LIST

- A: water tank
- 1: dissolved gas supplying device
- 3: water temperature controlling means
- 11: circulation path
- 12: pressure pump
- 13: gas cylinder
- 14: dissolved gas supplying means
- 15: gas channel
- 16: gas regulating valve
- 18: case
- 18A: inlet
- 18B: outlet
- 19: hollow fiber tube
- 51: temperature sensor
- 52: water temperature controller

## Claims

1. A dissolved gas supplying device for supplying dissolved gas to water in a water tank, comprising:
a circulation path to take out the water from the water tank and to return the water to the water tank;
a pressure pump to allow the water to flow through the circulation path;
a gas cylinder filled with gas to be dissolved;
a dissolved gas supplying means that is disposed in the circulation path to allow the water to pass through the dissolved gas supplying means and to dissolve the gas of the gas cylinder into the water; and
a gas regulating valve to open and close a gas channel that connects the gas cylinder to the dissolved gas supplying means.

2. The dissolved gas supplying device according to claim 1,
wherein the dissolved gas supplying means comprises a case with a water inlet at one end and a water outlet at the other end, and a hollow fiber tube that is made of gas permeable porous membrane and is disposed in a flow direction of the water in the case; and
the water is flown through the inlet, the hollow fiber tube and the outlet, while the pressurized gas is supplied into the case.

3. An aquatic organism rearing apparatus, comprising the dissolved gas supplying device according to claim 1 or 2,
wherein the water tank is a rearing tank for an aquatic organism of a chemosynthetic ecosystem that utilizes the dissolved gas, and
the water is sea water or artificial sea water.

4. The aquatic organism rearing apparatus according to claim 3, further comprising a water temperature controlling means to control a temperature of the water in the water tank,
wherein the water temperature controlling means comprises a temperature sensor to measure the water temperature, and a water temperature controller to control the temperature of the water to be within a predetermined range according to a detected value of the temperature sensor.
